(19) **Europäisches Patentamt**
**European Patent Office**
**Office européen des brevets**

(11) **EP 4 530 996 A1**

(12) **EUROPEAN PATENT APPLICATION**

(43) Date of publication:
02.04.2025 Bulletin 2025/14

(51) International Patent Classification (IPC):
*G06V 10/26* (2022.01)　　*G06T 7/11* (2017.01)

(21) Application number: 24185128.6

(22) Date of filing: 27.06.2024

(52) Cooperative Patent Classification (CPC):
**G06V 10/26; G06T 7/11; G06T 7/143**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.09.2023 KR 20230129566

(71) Applicant: **Medicalip Co., Ltd.**
**Gangwon-do 24341 (KR)**

(72) Inventors:
• PARK, Sang Joon
　Seoul (KR)
• KIM, Jong Min
　Yongin-si, Gyeonggi-do (KR)
• CHUNG, Han Jae
　Seoul (KR)
• HAM, Seung Min
　Seoul (KR)

(74) Representative: **Prendin, Marco et al**
**Cantaluppi & Partners S.r.l.**
**Piazzetta Cappellato Pedrocchi, 18**
**35122 Padova (IT)**

(54) **IMAGE SEGMENTATION METHOD AND APPARATUS**

(57) An image segmentation method and apparatus are provided. The image segmentation apparatus inputs an image into a deep learning model to obtain a plurality of probability maps, and, based on the plurality of probability maps, identifies a plurality of objects in the image,. Here, the plurality of probability maps include prediction values of the deep learning model indicating a probability that each pixel of the image belongs to a plurality of combinations defined as regions of at least two objects among the plurality of objects.

FIG. 1

EP 4 530 996 A1

**Description**

CROSS-REFERENCE TO RELATED APPLICATION

This application is based on and claims priority under 35 U.S.C. §119 to Korean Patent Application No. 10-2023-0129566, filed on September 26, 2023, in the Korean Intellectual Property Office, the disclosure of which is incorporated by reference herein in its entirety.

BACKGROUND

1. Field

The disclosure relates to an image segmentation method and apparatus, and more particularly, to a method and an apparatus capable of segmenting a plurality of objects in an image through a deep learning model.

This application is based on the support project of the Ministry of Health and Welfare (Task number: 1465034178, Task number: HI21C1 074050021, Research project name: Construction of big data specialized in intensive care and developing AI-based CDSS).

2. Description of the Related Art

Deep learning is a learning method that combines and analyzes data by using an artificial neural network. Deep learning models are used in various fields such as image recognition. For example, deep learning models may be used to diagnose lesions from medical images or segment human organ regions in medical images. In order to segment a specific region in an image by using a deep learning model, a process of training a deep learning model by using training data obtained by labeling (or annotating) a specific region is necessary. For example, in order to segment a liver region in medical images, a deep learning model needs to be trained by using training data with the labeled liver region, and in order to segment a lung region, a deep learning model needs to be trained by using training data with the labeled lung region. Therefore, when the number of regions to be segmented through a deep learning model increases, the learning time increases because the deep learning model should be trained for each region. In addition, in order to segment a plurality of regions by using a single deep learning model, training data for labeling the plurality of regions is required, and it is difficult to use, as training data, images in which only some of the plurality of regions are labeled.

SUMMARY

The disclosure provides an image segmentation method and apparatus for identifying a plurality of objects in an image using a single deep learning model without using a plurality of deep learning models to segment the plurality of objects in the image.

The disclosure provides an image segmentation method and apparatus configured to generate a single deep learning model for performing segmentation of a plurality of objects in an image.

Additional aspects will be set forth in part in the description which follows and, in part, will be apparent from the description, or may be learned by practice of the presented embodiments of the disclosure.

According to an aspect of the disclosure, there is provided an image segmentation method performed by an image segmentation apparatus, the image segmentation method including obtaining a plurality of probability maps by inputting an image into a deep learning model, and identifying a plurality of objects from the image, based on the plurality of probability maps, wherein the plurality of probability maps include prediction values of the deep learning model indicating a probability that each pixel of the image belongs to a plurality of combinations defined as regions of at least two objects among the plurality of objects.

According to another aspect of the disclosure, there is provided an image segmentation method performed by an image segmentation apparatus, the image segmentation method including defining a plurality of true masks obtained by combining regions of at least two objects among the plurality of objects in a training image, obtaining a plurality of probability maps indicating a probability that each pixel of the training image belongs to each true mask, by inputting the training image into a deep learning model, obtaining a value of a loss function indicating a difference between the plurality of true masks and the plurality of probability maps, and training the deep learning model so that the value of the loss function is minimized.

According to another aspect of the disclosure, an image segmentation apparatus includes a map generating unit configured to generate a plurality of probability maps by inputting an image into a deep learning model, and a segmentation unit configured to segment a plurality of objects from the image based on the plurality of probability maps, wherein the plurality of probability maps include prediction values of the deep learning model indicating a probability that each pixel of the image belongs to a plurality of combinations defined as regions of at least two objects among the plurality of objects.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a diagram illustrating an example of an image segmentation apparatus according to an embodiment;
FIG. 2 is a flowchart illustrating an example of an image segmentation method according to an embodiment;
FIG. 3 is a diagram illustrating an example of a deep learning model according to an embodiment;
FIG. 4 is a diagram illustrating an example of a combination generation method according to an embodiment;
FIG. 5 is a diagram illustrating an example of a method of identifying a plurality of objects by using a probability map of a deep learning model, according to an embodiment;
FIG. 6 is a flowchart illustrating an example of a method of training a deep learning model, according to an embodiment;
FIG. 7 is a diagram illustrating an example of a method of obtaining a loss function of a deep learning model, according to an embodiment;
FIG. 8 is a diagram illustrating an example of a structure of an image segmentation apparatus according to an embodiment; and
FIG. 9 is a diagram illustrating an example of a detailed structure of a learning unit of an image segmentation apparatus according to an embodiment.

DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a medical image segmentation method and apparatus according to an embodiment will be described below in detail with reference to the accompanying drawings.

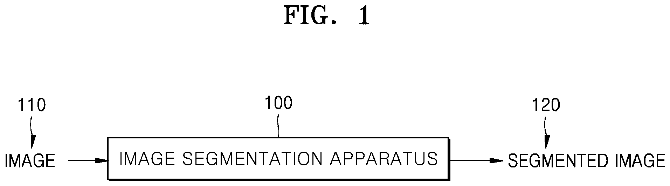

FIG. 1 is a diagram illustrating an example of an image segmentation apparatus according to an embodiment.

Referring to FIG. 1, the image segmentation apparatus 100 identifies or segments a plurality of objects in an image 110. For example, the image segmentation apparatus may output a segmented image 120 in which a plurality of objects in the image 110 are respectively segmented, or a segmented image 120 in which regions of the plurality of objects in the image 110 are segmented by color, brightness, or boundary lines.

As an example, the image 110 may be a medical image captured by medical equipment. For example, the image 110 may be a 3D medical image (i.e., tomography image) such as Computed Tomography (CT) or Magnetic Resonance Imaging (MRI) or a 2D medical image such as X-ray. In addition, the image 110 may be various types of images including pixels, and is not limited to a specific type.

The object is an object capable of distinguishing a region in the image 110. For example, in an image 110 capturing an animal, the object may be the animal. In the case of a medical image, the object may be a human body part (such as various organs or tissues) represented in the medical image. For example, objects in a medical image obtained by capturing a chest may be various human parts such as bones, muscles, fat, lungs, heart, and arteries. In another embodiment, when it is necessary to identify or segment a background region in the image 110, the background may be further included in the type of object.

The image segmentation apparatus 100 identifies or segments a plurality of objects in the image 110 using a single deep learning model. To this end, the deep learning model is a kind of multi-label model that separates and outputs a plurality of classes. The deep learning model is implemented as an artificial neural network and generated through a predetermined learning process.

In general, the segmentation target object and the class classified by the deep learning model may have a one-to-one correspondence. For example, in order to segment five objects, the deep learning model may be implemented as a model that classifies and outputs each pixel in an image into five classes. In this case, if there are 50 objects to be segmented, a deep learning model that classifies 50 classes is required. Since the number of objects to be segmented is directly proportional to the number of classes, identifying or segmenting a large number of objects at once with a single deep learning model has the disadvantage of increasing the computational amount of the deep learning model and taking a lot of learning time.

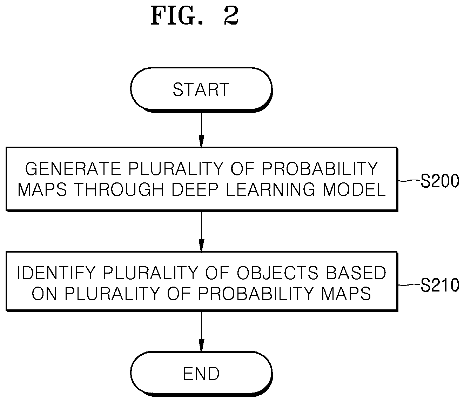

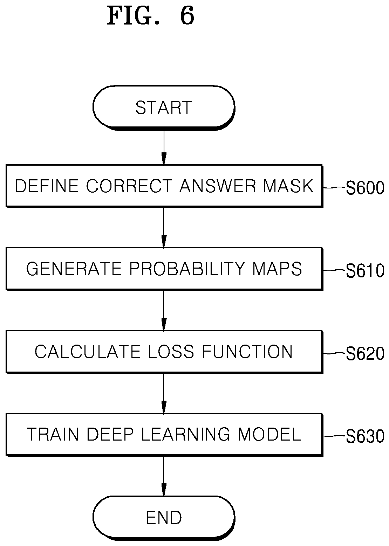

In order to solve this problem, in the present embodiment, the correspondence relationship between the object to be segmented and the class classified by the deep learning model is made N : M (N>M where N and M are natural numbers). One class corresponds to multiple objects. For example, when eight objects are to be segmented, the deep learning model may classify each pixel in the image into three classes rather than eight classes. A method of segmenting a plurality of objects in an image using such a deep learning model will be described in detail below with reference to FIG. 2. In addition, a method of generating a deep learning model of this embodiment through a learning process will be described again in FIG. 6.

FIG. 2 is a flowchart illustrating an example of an image segmentation method according to an embodiment.

Referring to FIG. 2, an image segmentation apparatus 100 obtains a plurality of probability maps by inputting an image into a deep learning model (S200). In the present embodiment, it is assumed that the deep learning model is trained to output a predefined number of probability maps.

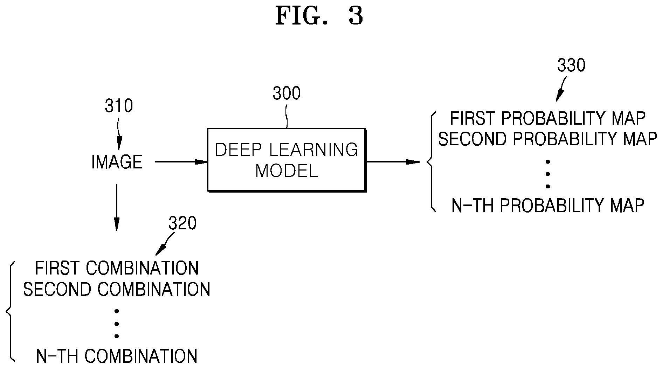

The plurality of probability maps include prediction values of the deep learning model indicating a probability that each pixel of the image belongs to a plurality of combinations defined as regions of at least two objects among the plurality of objects. In other words, each probability map does not represent the probability that each pixel in the image belongs to any one object, but represents the probability that each pixel belongs to a combination including regions of a plurality of objects. The probability map may represent, as a vector, a probability value of each pixel in the image. In addition, the probability map may represent data in various formats. An example of a combination defined as a plurality of object regions and a probability map output by a deep learning model is shown in FIG. 3.

The image segmentation apparatus 100 identifies a plurality of objects in an image based on a plurality of probability maps (S210). For example, if there are a first probability map and a second probability map for a first combination and a second combination, respectively, the image segmentation apparatus may determine whether each pixel belongs to a region of the first combination and/or a region of the second combination based on a probability value of each pixel present in the first probability map and the second probability map.

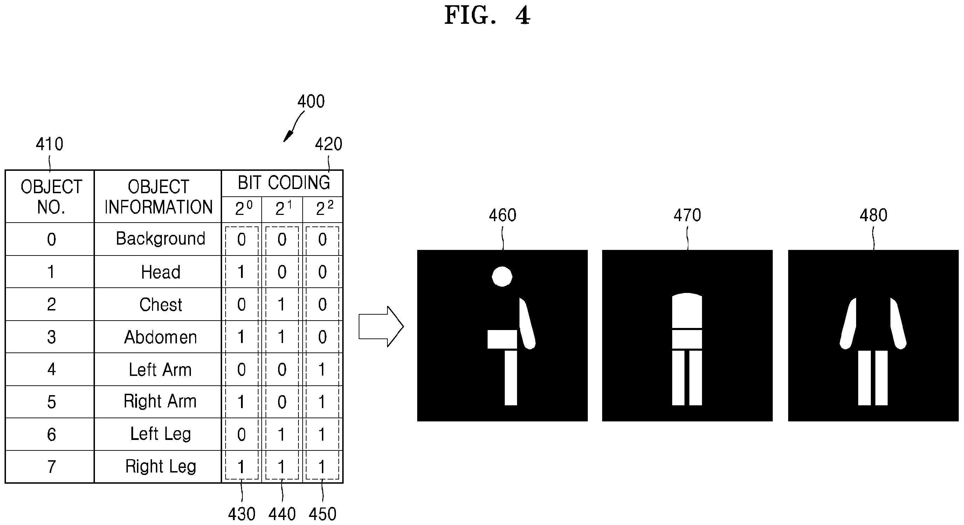

When the probability values of the first probability map and the second probability map for the first pixel in the image are 0.7 and 0.8, respectively, and a threshold value for determination is 0.5, the image segmentation apparatus 100 may determine that the first pixel belongs to the regions of both the first combination and the second combination. In addition, when the probability values of the first probability map and the second probability map for the second pixel in the image are 0.8 and 0.1, respectively, the image segmentation apparatus 100 may determine that the second pixel belongs to the region of the first combination but not the region of the second combination. If the region of the first combination is a region including the first object and the second object and the region of the second combination is a region including the first object and the third object, the object that belongs to the first combination but does not belong to the second combination is the second object, the image segmentation apparatus 100 may determine that the second pixel belongs to the second object. In this way, it is possible to determine to which object region each pixel belongs using a plurality of probability maps for a plurality of combinations. This will be specifically described again with reference to FIG. 4.

When a segmentation target object is selected by a user, the image segmentation apparatus 100 may visually provide a result obtained by segmenting a region of an object corresponding to the segmentation target object in the image. The image segmentation apparatus 100 may vary a range of segmentation results provided according to a user rating. For example, when the image segmentation apparatus 100 segments 100 objects from an image, the image segmentation apparatus 100 may provide a first user with 5 object segmentation results at a time and a second user with 10 object segmentation results at a time.

FIG. 3 is a diagram illustrating an example of a deep learning model according to an embodiment.

Referring to FIG. 3, a deep learning model 300 is a model that outputs a plurality of probability maps 330 when receiving an image 310 as an input. Each probability map 330 represents a probability that each pixel in the image belongs to each predefined combination 320. For example, a first probability map is data indicating a probability that each pixel in the image belongs to a region defined in a first combination, a second probability map is data indicating a probability that each pixel in the image belongs to a region defined in a second combination, and an N-th probability map is data indicating a probability that each pixel in the image belongs to a region defined in an N-th combination.

Each combination 320 is defined as two or more object regions. When the total number of objects to be segmented is N, various combinations including regions of at least two objects among the N objects are possible. For example, when there are a total of eight objects to be segmented, the first combination may include regions of the first and second objects in the image 310, the second combination may include regions of the first, second, and third objects in the image 310, and the N-th combination may include regions of the fifth, sixth, and seventh objects in the image 310. The number and regions of objects included in each combination may vary.

Each probability map 330 output by the deep learning model 300 of the present embodiment does not correspond to each object on a one-to-one correspondance, but corresponds to each combination 320 on a one-to-one correspondance. For example, when a total of eight objects are to be segmented using the deep learning model 300, the deep learning model 300 that defines three combinations and outputs three probability maps for the three combinations may be used. Of course, four or more combinations may be defined for eight objects. As the number of combinations 320 increases, the number of probability maps 330 generated by the deep learning model 300 increases accordingly, so that the optimal number of combinations may be defined and used in consideration of the amount of calculation. A method of generating an optimal combination will be described with reference to FIG. 4.

FIG. 4 is a diagram illustrating an example of a combination generation method according to an embodiment.

Referring to FIG. 4, the total number of objects 400 to be segmented is eight (8) including a background. According to an embodiment, the background may be excluded from the object. In this embodiment, the type of object is defined with a head, an arm, a leg, and the like to help understanding. When human body parts in a medical image are to be segmented, respective objects may include various human body parts such as lungs and liver.

The image segmentation apparatus 100 assigns a bit string 420 including a plurality of bits to each object as an identifier for distinguishing the plurality of objects. The minimum length of the bit string 420 required to distinguish a total of eight objects is three (3). In an embodiment, the minimum length of the bit string may be obtained as "⌈$\log_2$(the total number of target objects to be segmented)⌉". Here, the symbol "⌈A⌉" represents the smallest natural number greater than A. When the number of target objects to be segmented is 16, the minimum length of the bit string is 4 (=$\log_2 16$).

In an embodiment, the image segmentation apparatus 100 may assign object numbers 410 to each object sequentially from 0, and assign, to each object, a bit string 420 indicating each object number 410 as a binary number of a predefined bit length (e.g., $\log_2$(the total number of objects to be segmented). For example, "000" may be assigned to object No. 0 and "001" may be assigned to object No. 1. In this embodiment, bit strings are displayed in the order of $2^0$, $2^1$, and $2^2$ digits. In the present embodiment, the identifier of the object is expressed with the bit string 420 of the minimum length, but this is only an example, and a bit string of 4 or more bits instead of 3 bits may be assigned as the identifier of each object.

The image segmentation apparatus 100 defines a plurality of combinations including regions of objects with a same bit value, based on each digit of the bit string 420 of each object. For example, the image segmentation apparatus 100 generates a first combination 460 based on a first digit ($2^0$ digits) 430 of the bit string 420, generates a second combination 470 based on a second digit ($2^1$ digits) 440, and generates a third combination 480 based on a third digit ($2^2$ digits) 450. Since the length of the bit string in the present embodiment is 3 bits, three combinations 460, 470, and 480 are generated. In another embodiment, when the identifier for distinguishing each object includes a 4-bit bit string, the image segmentation apparatus may generate a total of four combinations.

The image segmentation apparatus 100 generates a combination including regions of objects where the bit value of each digit is a same. For example, since objects in which the first digit 430 of the bit string has a value of "1" are objects Nos. 1, 3, 5, and 7, the first combination 460 includes regions of the head, abdomen, right arm, and right leg. Since objects in which the second digit 440 of the bit string has a value of "1" are objects Nos. 2, 3, 6, and 7, the second combination 470 includes areas of the chest, abdomen, left leg, and right leg. Similarly, the third combination 480 includes regions of a left arm, a right arm, a left leg, and a right leg.

In an embodiment, each of the combinations 460, 470, and 480 may be in the form of a binary image in which pixels belonging to a region of an object are represented by "1" and pixels belonging to regions other than the object are represented by "0". In addition, various data formats indicating object regions belonging to each of the combinations 460, 470, and 480 may be used. In this embodiment, for better understanding, object regions in each of the combinations 460, 470, and 480 are shown as white, and other regions are shown as black.

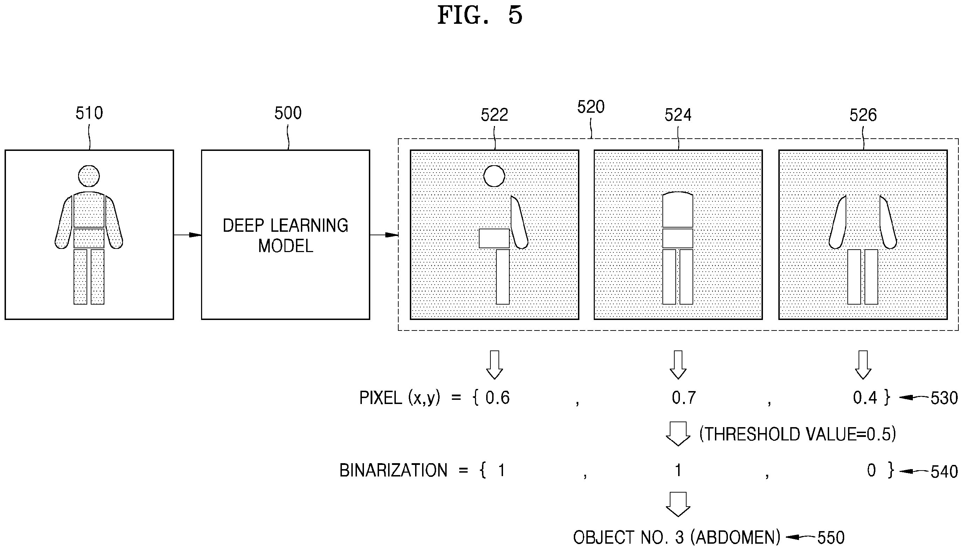

FIG. 5 is a diagram illustrating an example of a method of identifying a plurality of objects using a probability map of a deep learning model according to an embodiment.

Referring to FIGS. 4 and 5 together, a deep learning model 500 is a model that outputs three probability maps 520 for three combinations 460, 470, and 480 to identify the eight objects 400 of FIG. 4. In other words, when receiving the image 510 as an input, the deep learning model 500 outputs a first probability map 522 indicating a probability that each pixel of the image 510 belongs to the object regions defined in the first combination 460, a second probability map 524 indicating a probability that belongs to the object regions defined in the second combination 470, and a third probability map 526 indicating a probability that belongs to the object regions defined in the third combination 480.

For example, it is assumed that the probability values 530 of three probability maps 520 for any one pixel (x, y) are 0.6, 0.7, and 0.4, respectively. The image segmentation apparatus 100 binarizes the probability values 530 of the pixel (x, y) into binarized values 540 of (1, 1, 0), based on a predefined threshold (for example, 0.5). That is, the image segmentation apparatus 100 may convert the probability value to "1" if it is greater than or equal to 0.5, and may convert the probability value to "0" if it is less than 0.5. The threshold value may be defined as various values according to embodiments, but is not necessarily limited to 0.5.

When the binarized value (1, 1, 0) of pixel (x, y) is expressed as a bit string, it becomes "110". The image segmentation apparatus 100 compares the bit string "110" generated by binarizing the probability value of the pixel (x, y) with the bit string 420 assigned to each object in FIG. 4 to identify an object to which the pixel (x, y) belongs. Since the binarized value of the pixel (x, y) is "110", it is a same as the bit string "110" assigned to the object No. 3 of FIG. 4. Accordingly, the image segmentation apparatus 100 may classify the pixel (x, y) as pixels belonging to the abdomen 550 of the object No. 3. In this way, the image segmentation apparatus 100 may determine to which object each pixel in the image belongs.

The image segmentation apparatus 100 may segment regions of a plurality of objects in an image by distinguishing regions including pixels belonging to a same object. For example, in FIG. 4, a region of pixels corresponding to the head of object No. 1 may be detected, and a region of pixels corresponding to the chest of object No. 2 may be detected. Each pixel in the image 510 may be displayed in a different color or contrast for each object, or a plurality of object regions in the image 510 may be visually displayed by adding a boundary line between the objects.

FIG. 6 is a flowchart illustrating an example of a method of training a deep learning model according to an embodiment.

Referring to FIG. 6, the image segmentation apparatus 100 defines a plurality of true masks obtained by combining regions of at least two objects among a plurality of objects in a training image (S600). The training image may be an image obtained by labeling at least one region among a plurality of objects. Since the present embodiment does not train the deep learning model using any one object region, but trains the deep learning model using a region obtained by combining regions of several objects, the training image used for training may be an image in which different regions are labeled.

For example, when applying this embodiment to the medical field, a first training image is an image obtained by labeling the liver and lung regions, a second training image is an image obtained by labeling the liver and heart regions, and a third training image is an image obtained by labeling the lung and bone regions. The image segmentation apparatus 100 may generate a first true mask including regions of the liver and lungs from the first training image, generate a second true mask including regions of the liver and heart from the second training image, and generate a third true mask including regions of the lungs and bones from the third training image. When labeling of a plurality of objects in the training image exists, a plurality of true masks including regions of at least two objects among the plurality of objects may be generated from one training image. In another embodiment, when training data including the training image and the true mask is predefined and stored, the image segmentation apparatus 100 may use the stored training data as it is without a process of defining the true mask.

The image segmentation apparatus 100 may assign bit strings to a plurality of objects using the method described with reference to FIG. 4 and define a true mask including regions of objects included in each combination based on the bit strings. That is, each combination of FIG. 4 may be the true mask according to the present embodiment. The image segmentation apparatus 100 may generate a true mask in which regions of objects corresponding to each combination is defined as a mask region. For example, the true mask may be defined as a binary image including regions (e.g., pixel value = "1") of objects constituting a combination and other regions (e.g., pixel value = "0").

The image segmentation apparatus 100 inputs the training image into the deep learning model to obtain a plurality of probability maps indicating a probability that each pixel of the training image belongs to each true mask (S610). Each of the probability maps output by the deep learning model is a value representing the probability that each pixel of the training image belongs to the mask region of the true mask. When three true masks are defined by the method of FIG. 4, the deep learning model generates three probability maps as shown in FIG. 5.

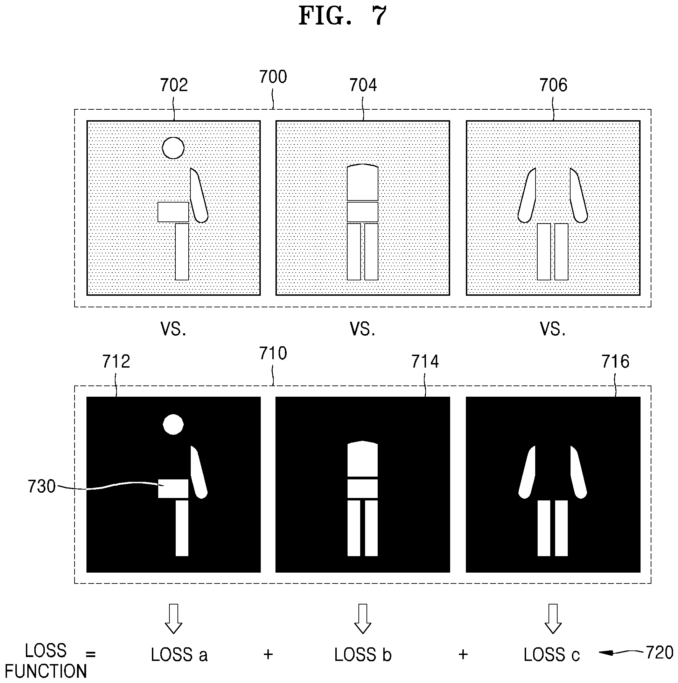

The image segmentation apparatus 100 calculates a value of a loss function indicating a difference between the plurality of true masks and the plurality of probability maps (S620). For example, when three probability maps are generated, the image segmentation apparatus obtains a first loss between a first probability map and a first true mask, obtains a second loss between a second probability map and a second true mask, obtains a third loss between a third probability map and a third true mask, and obtains a value of the loss function by summing the first, second, and third losses (e.g., statistical sum of various methods such as total sum, average, etc.). In addition, various methods of calculating an error between the true mask, which is a ground truth, and the probability map, which is a predicted value of the deep learning model, may be applied to this embodiment. An example of a method of obtaining a value of a loss function will be described again with reference to FIG. 7.

The image segmentation apparatus 100 trains the deep learning model so that the value of the loss function is minimized (S630). There are a plurality of training images in training data, and the image segmentation apparatus may repeatedly train the deep learning model by applying the method of the present embodiment to the plurality of training images. The training method itself, which adjusts various parameters of the deep learning model to minimize the value of the loss function, is already a widely known method, so further explanation thereof is omitted.

FIG. 7 is a diagram illustrating an example of a method of obtaining a loss function of a deep learning model according to an embodiment.

Referring to FIG. 7, it is assumed that the deep learning model is a model that generates three probability maps 700 for three true masks 710 to identify eight objects. The image segmentation apparatus 100 determines an error between the true mask 710 and the probability map 700, which correspond to each other. Binary Cross Entropy (BCE) of pixels for each channel of the deep learning model is expressed as an equation as follows. Equation 1 below is only an example for helping understanding, and this embodiment is not necessarily limited to Equation 1.

**【Equation 1】**

$$BCE(t,z) = -(t \cdot \log(z) + (1-t) \cdot \log(1-z))$$

Here, t is a vector indicating a value (e.g., mask region=1, other region=0) of each pixel of the true mask 710. z is a vector representing a value of each pixel of the probability map 700.

For example, if t={1, 1, 0} and z={0.6, 0.7, 0.4} for any one pixel in the training image, a loss "a" between a first true mask 712 and a first probability map 702 of a corresponding pixel, a loss b between a second true mask 714 and a second probability map 704, and a loss c between a third true mask 716 and a third probability map 706 are calculated as follows, respectively.

**【Equation 2】**

$$Loss\ a = BCE(1, 0.6) = -(1 \cdot \log(0.6) + (1-1) \cdot \log(1-0.6)) = -(\log 0.6)$$
$$Loss\ b = BCE(1, 0.7) = -(1 \cdot \log(0.7) + (1-1) \cdot \log(1-0.7)) = -(\log 0.7)$$
$$Loss\ c = BCE(1, 0.4) = -(0 \cdot \log(0.4) + (1-0) \cdot \log(1-0.4)) = -(\log 0.6)$$

The image segmentation apparatus 100 may calculate a value L of the loss function 720 of each pixel by adding the loss of each channel.

**【Equation 3】**

$$Loss\ fucntion\ value(L) = \sum_{i=1}^{M} BCE(t_i, z_i)$$

Here, M represents the number of probability maps (i.e., the number of output channels). The value of the loss function for the pixel in Equation 2 is "Loss a+Loss b+Loss c".

The image segmentation apparatus 100 trains the deep learning model so that the value of the loss function for each pixel is minimized. For example, if a deep learning model is trained so that the loss function value of Equation 3 approaches 0, the probability value of each pixel of the probability map is trained to approach 1 or 0. In Equation 1, if the value of the true mask is "1" (e.g., in the case of loss a and loss b), the probability of the probability map is trained to be close to "1", and if the value of the true mask is "0" (e.g., in the case of loss c), the probability of the probability map is trained to be close to "0" through "(1-t)log(1-z)", which is the second term of Equation 1.

In an embodiment, when training a deep learning model using training images including different labeling, a mask region may be used to more accurately calculate the value of the loss function. That is, the image segmentation apparatus may obtain the value of the loss function with respect to the mask region 730 (i.e., the white region) of the true mask. For example, the image segmentation apparatus may obtain a value of a loss function for pixels corresponding to the mask region 730 of the first ture mask 712 in the first probability map 702, obtain a value of a loss function for pixels corresponding to the mask region of the second true mask 714 in the second probability map 704, and obtain a value of a loss function for pixels corresponding to the mask region of the third true mask 716 in the third probability map 706. For example, the image segmentation apparatus 100 may obtain a value of the loss function for the mask region 730 by multiplying the loss "a" by the first true mask (mask region 730=1 and other region=0) including a binary value. That is, since the value of the loss "a" for the pixel other than the mask region 730 is multiplied by the pixel value "0" other than the mask region 730 of the true mask 710, all of them are zero.

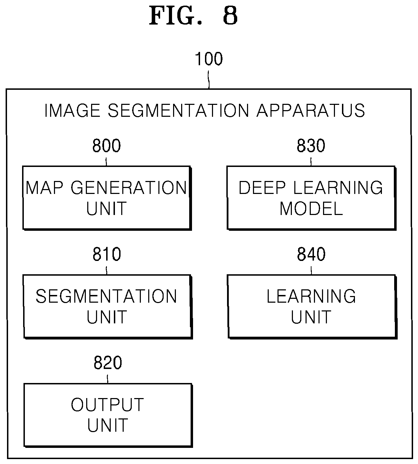

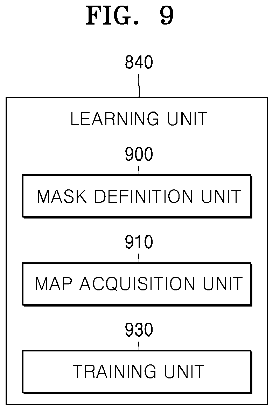

FIG. 8 is a diagram illustrating an example of an image segmentation apparatus according to an embodiment. FIG. 9 is a diagram illustrating an example of a detailed structure of a learning unit of an image segmentation apparatus according to an embodiment.

Referring to FIGS. 8 and 9 together, the image segmentation apparatus 100 includes a map generation unit 800, a segmentation unit 810, an output unit 820, a deep learning model 830, and a learning unit 840. If the deep learning model 830 has already been trained, the learning unit 840 may be omitted. For example, the image segmentation apparatus 100 may receive and store a trained deep learning model 830 from the outside. In another example, the image segmentation apparatus 100 may include only the deep learning model 830 and the learning unit 840. However, for convenience of description, the image segmentation apparatus 100 including all components will be described below. In addition, the image segmentation apparatus 100 may be implemented as a computing device including a memory, a processor, and an input/output device. In this case, each component may be implemented in software (program) and then performed by a processor after being loaded on a memory.

The map generation unit 800 generates a plurality of probability maps by inputting an image into the deep learning model 830. The probability map generated by the deep learning model is not for each object, but for a combination of multiple objects. That is, the plurality of probability maps include prediction values of the deep learning model indicating a probability that each pixel of the image belongs to a plurality of combinations defined as regions of at least two objects among the plurality of objects. An example of a method of generating a combination including a plurality of objects is shown in FIG. 4.

The segmentation unit 810 segments a plurality of objects in an image based on the plurality of probability maps. That is, the segmentation unit 810 may determine to which object each pixel belongs and segment an object region including pixels corresponding to each object. An example of a method of identifying an object to which each pixel belongs based on probability maps is shown in FIG. 5.

When a segmentation target object is selected by a user, the output unit 820 may visually provide a result obtained by segmenting a region of an object corresponding to the segmentation target object in the image. For example, when a user selects a first object as an object to be segmented, the output unit 820 may segment and display the region of the first object in the image or output a segmented image including only the region of the first object. In an embodiment, a range of segmentation results provided to users (for example, the number of segmented objects, etc.) may be varied depending on the level of each user.

The learning unit 840 trains the deep learning model 830. The learning unit 840 includes a mask definition unit 900, a map acquisition unit 910, and a training unit 920. Examples of training methods of the deep learning model 830 are shown in FIGS. 6 and 7.

The mask definition unit 900 defines a plurality of true masks obtained by combining regions of at least two objects among the plurality of objects in a training image. In an embodiment, the mask definition unit 900 may define the identifiers of a plurality of objects as a bit string of a certain length and generate a true mask that includes regions of objects with a same bit value for each digit of the bit string.

The map acquisition unit 910 inputs the training image into the deep learning model 830 to obtain a plurality of probability maps indicating a probability that each pixel of the training image belongs to each true mask. The training unit 920 trains the deep learning model so that the value of the loss function indicating a difference between the plurality of true masks and the plurality of probability maps is minimized.

The present method according to the disclosure may also be implemented as computer-readable program code on a computer-readable recording medium. The computer-readable recording medium includes all types of recording devices in which data readable by a computer system is stored. Examples of computer-readable recording media include ROM, RAM, CD-ROM, magnetic tape, floppy disk, optical data storage device, and the like. In addition, computer-readable recording media are distributed in a network-connected computer system so that computer-readable code may be stored and executed in a distributed manner.

According to an embodiment, a plurality of objects in an image may be identified or segmented using a single deep learning model. Since the deep learning model outputs a probability map for a combination of at least two objects among a plurality of objects rather than each probability map for a plurality of objects, the number of probability maps may be made smaller than the number of objects to be segmented, thereby shortening the computational amount and training time of the deep learning model. According to another embodiment, since the deep learning model is trained based on a region combination of at least two objects among the plurality of objects, an image in which different object regions are labeled may be used as training data together. In addition, when applying the present embodiment to a medical image, it is possible to identify or segment a plurality of human body parts in the medical image at a time.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

The invention could be inter alia defined by the following examples:

1. An image segmentation method performed by an image segmentation apparatus, the image segmentation method comprising:

   obtaining a plurality of probability maps by inputting an image into a deep learning model; and
   identifying a plurality of objects from the image, based on the plurality of probability maps, wherein
   the plurality of probability maps comprises prediction values of the deep learning model indicating a probability that each pixel of the image belongs to a plurality of combinations defined as regions of at least two objects among the plurality of objects.

2. The method of example 1, wherein

the image is a two-dimensional (2D) medical image or a three-dimensional (3D) medical image, and
the plurality of objects are a plurality of human body parts.

3. The method of any one of the preceding examples, wherein

an identifier of each object is defined as a bit string of a certain length,
each combination includes regions of objects with a same bit value, based on each digit in the bit string of each object, and
the identifying includes identifying the identifier of the object corresponding to the bit string generated by binarizing, based on a predefined threshold value, the probability of each pixel belonging to each combination.

4. The method of example 3, further comprising segmenting regions of the plurality of objects in the image by using pixels corresponding to each identifier.

5. The method of example 3, wherein the length of the bit string is greater than or equal to [$\log_2$ (the total number of the plurality of objects)].

6. The method of any one of the preceding examples, wherein the number of probability maps output by the deep learning model is greater than or equal to [$\log_2$ (the total number of the plurality of objects)].

7. The method of any one of the preceding examples, further comprising:

receiving a segmentation target object in the image by selection by a user; and
visualizing and providing a result of segmentation of an object region corresponding to an object to be segmented among the plurality of objects.

8. The method of any one of the preceding examples, further comprising training the deep learning model to output the plurality of probability maps indicating the probability that each pixel of the training image belongs to each combination by using training data including a training image and a true mask for each combination.

9. An image segmentation method performed by an image segmentation apparatus, the image segmentation method comprising:

defining a plurality of true masks obtained by combining regions of at least two objects among the plurality of objects in a training image;
obtaining a plurality of probability maps indicating a probability that each pixel of the training image belongs to each true mask, by inputting the training image into a deep learning model;
obtaining a value of a loss function indicating a difference between the plurality of true masks and the plurality of probability maps; and
training the deep learning model so that the value of the loss function is minimized.

10. The method of example 9, wherein the defining of the plurality of true masks comprises:

defining an identifier of each object as a bit string of a certain length; and
generating a true mask including regions of objects having a same bit value for each digit of the bit string.

11. The method of any one of examples 9 to 10, wherein the number of the true masks is greater than or equal to [$\log_2$ (the total number of the plurality of objects)].

12. The method of any one of the examples 9 to 11, wherein the obtaining of the value of the loss function comprises obtaining an error between each true mask and each probability map, based on a mask region of each true mask.

13. The method of any one of the examples 9 to 12, wherein

the image is a 2D medical image or a 3D medical image, and
the plurality of objects are a plurality of human body parts, and the method further comprises identifying the plurality of human body parts in the medical image, based on the plurality of probability maps obtained by inputting the medical image into the trained deep learning model.

14. An image segmentation apparatus comprising:

a map generating unit configured to generate a plurality of probability maps by inputting an image into a deep learning model; and
a segmentation unit configured to segment a plurality of objects from the image, based on the plurality of probability maps, wherein
the plurality of probability maps comprises prediction values of the deep learning model indicating a probability that each pixel of the image belongs to a plurality of combinations defined as regions of at least two objects among the plurality of objects.

15. The apparatus of example 14, wherein

an identifier of each object is defined as a bit string of a certain length,
each combination includes regions of objects with a same bit value, based on each digit in the bit string of each object, and
the segmentation unit identifies the identifier of the object corresponding to the bit string generated by binarizing, based on a predefined threshold value, the probability of each pixel belonging to each combination.

16. The apparatus of example 14 or 15, further comprising a learning unit configured to train the deep learning model, wherein the learning unit comprises:

a mask definition unit configured to define a plurality of true masks obtained by combining regions of at least two objects among the plurality of objects in a training image;
a map acquisition unit configured to acquire the plurality of probability maps indicating a probability that each pixel of the training image belongs to each true mask, by inputting the training image into the deep learning model; and
a training unit configured to train the deep learning model to minimize a value of a loss function indicating a difference between the plurality of true masks and the plurality of probability maps.

17. The apparatus of example 16, wherein the mask definition unit defines identifiers of the plurality of objects as bit strings of a predetermined length and generates a true mask including regions of objects having a same bit value for each digit of the bit string.

18. The apparatus of any one of the examples 14 to 17, further comprising an output unit configured to, when a segmentation target object is selected by a user, visually provide a result obtained by segmenting a region of an object corresponding to the segmentation target object in the image.

19. A computer-readable recording medium on which a computer program for performing the method of any one of the examples 1 to 13 is recorded.

**Claims**

1. An image segmentation method performed by an image segmentation apparatus, the image segmentation method comprising:

obtaining a plurality of probability maps by inputting an image into a deep learning model; and
identifying a plurality of objects from the image, based on the plurality of probability maps, wherein
the plurality of probability maps comprises prediction values of the deep learning model indicating a probability that each pixel of the image belongs to a plurality of combinations defined as regions of at least two objects among the plurality of objects.

2. The method of claim 1, wherein

the image is a two-dimensional (2D) medical image or a three-dimensional (3D) medical image, and
the plurality of objects are a plurality of human body parts.

3. The method of claim 1, wherein

an identifier of each object is defined as a bit string of a certain length,
each combination includes regions of objects with a same bit value, based on each digit in the bit string of each object, and
the identifying includes identifying the identifier of the object corresponding to the bit string generated by binarizing, based on a predefined threshold value, the probability of each pixel belonging to each combination.

4. The method of claim 3, further comprising segmenting regions of the plurality of objects in the image by using pixels corresponding to each identifier.

5. The method of claim 3, wherein the length of the bit string is greater than or equal to [$\log_2$ (the total number of the plurality of objects)].

6. The method of claim 1, wherein the number of probability maps output by the deep learning model is greater than or equal to [$\log_2$ (the total number of the plurality of objects)].

7. The method of claim 1, further comprising:

   receiving a segmentation target object in the image by selection by a user; and
   visualizing and providing a result of segmentation of an object region corresponding to an object to be segmented among the plurality of objects.

8. The method of claim 1, further comprising training the deep learning model to output the plurality of probability maps indicating the probability that each pixel of the training image belongs to each combination by using training data including a training image and a true mask for each combination.

9. An image segmentation method performed by an image segmentation apparatus, the image segmentation method comprising:

   defining a plurality of true masks obtained by combining regions of at least two objects among the plurality of objects in a training image;
   obtaining a plurality of probability maps indicating a probability that each pixel of the training image belongs to each true mask, by inputting the training image into a deep learning model;
   obtaining a value of a loss function indicating a difference between the plurality of true masks and the plurality of probability maps; and
   training the deep learning model so that the value of the loss function is minimized.

10. The method of claim 9, wherein the defining of the plurality of true masks comprises:

    defining an identifier of each object as a bit string of a certain length; and
    generating a true mask including regions of objects having a same bit value for each digit of the bit string.

11. The method of claim 9, wherein the number of the true masks is greater than or equal to [$\log_2$ (the total number of the plurality of objects)].

12. The method of claim 9, wherein the obtaining of the value of the loss function comprises obtaining an error between each true mask and each probability map, based on a mask region of each true mask.

13. The method of claim 9, wherein

    the image is a 2D medical image or a 3D medical image, and
    the plurality of objects are a plurality of human body parts, and the method further comprises identifying the plurality of human body parts in the medical image, based on the plurality of probability maps obtained by inputting the medical image into the trained deep learning model.

14. An image segmentation apparatus comprising:

    a map generating unit configured to generate a plurality of probability maps by inputting an image into a deep learning model; and
    a segmentation unit configured to segment a plurality of objects from the image, based on the plurality of probability maps, wherein
    the plurality of probability maps comprises prediction values of the deep learning model indicating a probability that each pixel of the image belongs to a plurality of combinations defined as regions of at least two objects among the plurality of objects.

11

15. The apparatus of claim 14, wherein

an identifier of each object is defined as a bit string of a certain length,
each combination includes regions of objects with a same bit value, based on each digit in the bit string of each object, and
the segmentation unit identifies the identifier of the object corresponding to the bit string generated by binarizing, based on a predefined threshold value, the probability of each pixel belonging to each combination.

16. The apparatus of claim 14, further comprising a learning unit configured to train the deep learning model, wherein the learning unit comprises:

a mask definition unit configured to define a plurality of true masks obtained by combining regions of at least two objects among the plurality of objects in a training image;
a map acquisition unit configured to acquire the plurality of probability maps indicating a probability that each pixel of the training image belongs to each true mask, by inputting the training image into the deep learning model; and
a training unit configured to train the deep learning model to minimize a value of a loss function indicating a difference between the plurality of true masks and the plurality of probability maps.

17. The apparatus of claim 16, wherein the mask definition unit defines identifiers of the plurality of objects as bit strings of a predetermined length and generates a true mask including regions of objects having a same bit value for each digit of the bit string.

18. The apparatus of claim 14, further comprising an output unit configured to, when a segmentation target object is selected by a user, visually provide a result obtained by segmenting a region of an object corresponding to the segmentation target object in the image.

19. A computer-readable recording medium on which a computer program for performing the method of claim 1 or 9 is recorded.

# FIG. 1

110           100           120

IMAGE → | IMAGE SEGMENTATION APPARATUS | → SEGMENTED IMAGE

# FIG. 2

START

GENERATE PLURALITY OF PROBABILITY
MAPS THROUGH DEEP LEARNING MODEL — S200

IDENTIFY PLURALITY OF OBJECTS BASED
ON PLURALITY OF PROBABILITY MAPS — S210

END

# FIG. 3

310

IMAGE

300

DEEP LEARNING
MODEL

330

FIRST PROBABILITY MAP
SECOND PROBABILITY MAP
⋮
N-TH PROBABILITY MAP

320

FIRST COMBINATION
SECOND COMBINATION
⋮
N-TH COMBINATION

EP 4 530 996 A1

## FIG. 4

400

410                                                    420

| OBJECT NO. | OBJECT INFORMATION | BIT CODING | | |
|---|---|---|---|---|
| | | $2^0$ | $2^1$ | $2^2$ |
| 0 | Background | 0 | 0 | 0 |
| 1 | Head | 1 | 0 | 0 |
| 2 | Chest | 0 | 1 | 0 |
| 3 | Abdomen | 1 | 1 | 0 |
| 4 | Left Arm | 0 | 0 | 1 |
| 5 | Right Arm | 1 | 0 | 1 |
| 6 | Left Leg | 0 | 1 | 1 |
| 7 | Right Leg | 1 | 1 | 1 |

430   440   450

**FIG. 5**

PIXEL (x,y) = { 0.6 , 0.7 , 0.4 } ←—530

⇩ (THRESHOLD VALUE=0.5)

BINARIZATION = { 1 , 1 , 0 } ←—540

⇩

OBJECT NO. 3 (ABDOMEN) ←—550

# FIG. 6

START

DEFINE CORRECT ANSWER MASK —S600

GENERATE PROBABILITY MAPS —S610

CALCULATE LOSS FUNCTION —S620

TRAIN DEEP LEARNING MODEL —S630

END

## FIG. 7

LOSS FUNCTION = LOSS a + LOSS b + LOSS c ←720

# FIG. 8

100

**IMAGE SEGMENTATION APPARATUS**

800

MAP GENERATION
UNIT

830

DEEP LEARNING
MODEL

810

SEGMENTATION
UNIT

840

LEARNING
UNIT

820

OUTPUT
UNIT

# FIG. 9

840

LEARNING UNIT

900

MASK DEFINITION UNIT

910

MAP ACQUISITION UNIT

930

TRAINING UNIT

**Europäisches Patentamt**
**European Patent Office**
**Office européen des brevets**

# EUROPEAN SEARCH REPORT

Application Number

EP 24 18 5128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GIDARIS SPYROS ET AL: "Object Detection via a Multi-region and Semantic Segmentation-Aware CNN Model", 2015 IEEE INTERNATIONAL CONFERENCE ON COMPUTER VISION (ICCV), IEEE, 7 December 2015 (2015-12-07), pages 1134-1142, XP032866440, DOI: 10.1109/ICCV.2015.135 [retrieved on 2016-02-17] * Figures: 3, 4 ; 3 ; page 1138, left column ; page 1137, right column ; page 1138 * | 1,3-19 | INV. G06V10/26 G06T7/11 |
| X | PEMASIRI AKILA ET AL: "Semantic Segmentation Of Hands In Multimodal Images: A Region New-Based CNN Approach", 2019 IEEE 16TH INTERNATIONAL SYMPOSIUM ON BIOMEDICAL IMAGING (ISBI 2019), IEEE, 8 April 2019 (2019-04-08), pages 819-823, XP033576390, DOI: 10.1109/ISBI.2019.8759215 [retrieved on 2019-07-10] * 2.3.3 and Figures 3 and 4 * | 1,2 | |
| A | ASHWATH V. A. ET AL: "TS-CNN: A Three-Tier Self-Interpretable CNN for Multi-Region Medical Image Classification", IEEE ACCESS, vol. 11, 1 January 2023 (2023-01-01), pages 78402-78418, XP093215059, USA ISSN: 2169-3536, DOI: 10.1109/ACCESS.2023.3299850 Retrieved from the Internet: URL:https://ieeexplore.ieee.org/iel7/62876 39/6514899/10197361.pdf> | 1 | |

TECHNICAL FIELDS SEARCHED (IPC)

G06V
G06T

-/--

The present search report has been drawn up for all claims

| Place of search | Date of completion of the search | Examiner |
|---|---|---|
| The Hague | 15 October 2024 | Versluis, Anton |

EPO FORM 1503 03.82 (P04C01)

Europäisches
Patentamt
European
Patent Office
Office européen
des brevets

# EUROPEAN SEARCH REPORT

Application Number

EP 24 18 5128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN ZHANGBAO ET AL: "Research on Identification of Sick Chicken Based on Multi Region Deep Features Fusion", 2021 6TH INTERNATIONAL CONFERENCE ON COMPUTATIONAL INTELLIGENCE AND APPLICATIONS (ICCIA), IEEE, 11 June 2021 (2021-06-11), pages 174-179, XP034052847, DOI: 10.1109/ICCIA52886.2021.00041 [retrieved on 2021-12-08] ----- | 1 | |
| A | LIN TSUNG-YI ET AL: "Microsoft COCO: Common Objects in Context", 1 January 2014 (2014-01-01), SPRINGER, PAGE(S) 740 - 755, XP047529588, ----- | 1 | |

TECHNICAL FIELDS
SEARCHED      (IPC)

The present search report has been drawn up for all claims

| Place of search | Date of completion of the search | Examiner |
|---|---|---|
| The Hague | 15 October 2024 | Versluis, Anton |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.........................................................................................

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230129566